(19) Europäisches Patentamt
European Patent Office
Office européen des brevets

(11) **EP 3 882 327 B1**

(12) **EUROPÄISCHE PATENTSCHRIFT**

(45) Veröffentlichungstag und Bekanntmachung des Hinweises auf die Patenterteilung:
**09.11.2022 Patentblatt 2022/45**

(21) Anmeldenummer: **20163548.9**

(22) Anmeldetag: **17.03.2020**

(51) Internationale Patentklassifikation (IPC):
*C09K 17/12* (2006.01)   *E02D 3/12* (2006.01)
*E02D 5/46* (2006.01)   *E02D 17/04* (2006.01)

(52) Gemeinsame Patentklassifikation (CPC):
**E02D 3/12; C09K 17/12; E02D 5/46; E02D 17/04**

(54) **VERFAHREN ZUM HERSTELLEN EINER ABDICHTSOHLE IM BODEN UND ABDICHTSOHLE**

SEALED BASE AND METHOD FOR PRODUCING A SEALED BASE IN THE FLOOR

PROCÉDÉ DE FABRICATION D'UNE SEMELLE D'ÉTANCHÉITÉ AU SOL ET SEMELLE D'ÉTANCHÉITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.09.2021 Patentblatt 2021/38**

(73) Patentinhaber: **BAUER Spezialtiefbau GmbH**
**86529 Schrobenhausen (DE)**

(72) Erfinder:
• **Beckhaus, Karsten**
**80801 München (DE)**
• **Colmorgen, Eckart**
**86529 Schrobenhausen (DE)**

(74) Vertreter: **Wunderlich & Heim Patentanwälte**
**Partnerschaftsgesellschaft mbB**
**Irmgardstraße 3**
**81479 München (DE)**

(56) Entgegenhaltungen:
**EP-A1- 0 918 110   FR-A1- 2 582 694**
**US-A- 3 690 106**

**Beschreibung**

Die Erfindung betrifft ein Verfahren zum Herstellen einer Abdichtsohle im Boden mittels einer Injektionslanze, welche bis zu einer definierten Bodenschicht eingebracht und durch welche ein Abdichtmedium in den Boden injiziert wird, wobei ein Abdichtkörper im Boden erstellt wird, und eine Vielzahl von Abdichtkörpern derart beabstandet zueinander in die Bodenschicht eingebracht werden, so dass eine durchgehende Abdichtsohle gebildet wird, gemäß dem Oberbegriff des Anspruchs 1.

Die Erfindung betrifft weiterhin eine Abdichtsohle im Boden, wobei die Abdichtsohle aus einer Vielzahl von Abdichtkörpern aus einem injizierten Abdichtmedium gebildet ist, und die Abdichtkörper derart beabstandet zueinander eingebracht sind, so dass diese eine durchgehende Abdichtsohle bilden.

Ein gattungsgemäßes Verfahren ist aus der DE 1 97 51 335 C1 bekannt. Bei diesem bekannten Verfahren werden scheiben- oder säulenförmige Abdichtkörper in Reihen nebeneinander erstellt, welche sich zumindest bereichsweise überlappen. Zwischen einzelnen Reihen besteht ein Reihenabstand, in welchem jeweils eine Reihe aus weiteren Abdichtkörpern erstellt wird, welche sich und die zuvor hergestellten Abdichtkörper überlappen, so dass eine insgesamt durchgehende, geschlossene Abdichtsohle erstellt wird.

Die jeweiligen Überlappungen bedeuten dabei einen erhöhten Materialverbrauch. Dabei gilt, je höher der Grad der Überlappung, umso höher der Materialverbrauch, aber umso höher auch die Sicherheit zur Dichtigkeit der erstellten Sohle. Je geringer der Grad der Überlappung, umso höher ist die Gefahr einer Fehlstelle in der Abdichtsohle.

Darüber hinaus wird eine Dichtigkeit einer Abdichtsohle auch durch die vertikale Dicke der erstellten Abdichtsohle bestimmt. Diese kann bis zu einigen Metern betragen. Auch hierbei gilt grundsätzlich, je höher die Dicke einer Abdichtsohle, umso höher der Materialverbrauch, aber umso höher auch der Grad an Dichtigkeit.

Ein weiteres derartiges Verfahren zur Herstellung von Abdichtkörpern in einem Boden geht aus der DE 199 60 023 A1 hervor. Die Abdichtkörper werden dabei als Säulen erstellt, die nach einem vorgegebenen Raster eingebracht werden und sich im Wesentlichen in derselben Bodenschicht erstrecken, um durch entsprechende Überlappung eine durchgehende Sohle zu bilden.

Ein Injektionsmedium zum Bilden eines Abdichtkörpers im Boden ist aus der DE 102 18 771 B4 bekannt.

Eine Injektionslanze mit Injektionsventil zum Bilden eines kugelförmigen Abdichtkörpers geht aus der EP 3 034 701 B1 hervor.

Die EP 0 918 110 A1 offenbart ein Verfahren zum Herstellen einer Abdichtsohle mittels einer Injektionslanze, welche bis zu einer definierten Bodenschicht eingebracht und durch welche ein Abdichtmedium in den Boden injiziert wird, wobei ein Abdichtkörper im Boden erstellt wird, und eine Vielzahl von Abdichtkörpern derart beabstandet zueinander in die Bodenschicht eingebracht werden, so dass eine durchgehende Abdichtsohle im Boden gebildet wird, wobei eine Vielzahl erster Abdichtkörper in einer ersten Bodenschicht in einem vorgegebenen ersten Abstandsraster mit Rasterzwischenräumen erstellt wird, wobei die ersten Abdichtkörper in einer horizontalen Richtung zueinander beabstandet sind, und wobei eine Vielzahl zweiter Abdichtkörper in einer zweiten Bodenschicht welche einen vorgegebenen vertikalen Abstand zu der ersten Bodenschicht hat, versetzt zu den ersten Abdichtkörpern eingebracht wird, wobei zum Bilden der Abdichtsohle die zweiten Abdichtkörper die Rasterzwischenräume der ersten Abdichtkörper zumindest teilweise abdecken und angrenzende erste Abdichtkörper kontaktieren.

Der Erfindung liegt die **Aufgabe** zugrunde, ein Verfahren und eine Abdichtsohle anzugeben, mit welchen in effizienter Weise im Boden eine besonders dichte und kompakte Abdichtung erstellt werden kann.

Die Aufgabe wird nach der Erfindung durch ein Verfahren mit den Merkmalen des Anspruchs 1 beziehungsweise durch eine Abdichtsohle mit den Merkmalen des Anspruchs 9 gelöst. Bevorzugte Ausführungsformen der Erfindung sind in den abhängigen Ansprüchen angegeben.

Das erfindungsgemäße Verfahren ist dadurch gekennzeichnet, dass eine Vielzahl erster Abdichtkörper in einer ersten Bodenschicht in einem vorgegebenen ersten Abstandsraster mit Rasterzwischenräumen erstellt wird, wobei die ersten Abdichtkörper in einer horizontalen Richtung zueinander beabstandet sind, und dass eine Vielzahl zweiter Abdichtkörper in einer zweiten Bodenschicht, welche einen vorgegebenen vertikalen Abstand zu der ersten Bodenschicht hat, versetzt zu den ersten Abdichtkörpern eingebracht wird, wobei zum Bilden der Abdichtsohle die zweiten Abdichtkörper die Rasterzwischenräume der ersten Abdichtkörper zumindest teilweise abdecken und angrenzende erste Abdichtkörper kontaktieren.

Eine Grundidee der Erfindung kann darin gesehen werden, eine Vielzahl erster Abdichtkörper nicht flächig oder zusammenhängend in einer ersten Bodenschicht auszubilden, sondern beabstandet zueinander mit einem vorgegebenen Abstandsraster. Dabei sind zwischen benachbarten Abdichtkörpern Rasterzwischenräume ausgebildet, so dass in der ersten Bodenschicht selbst noch keine durchgehende und wasserundurchlässige Abdichtsohle im Boden erstellt wird. Nach einem Aspekt der Erfindung kann dies durch eine Vielzahl zweiter Abdichtkörper in einer vertikal versetzten zweiten Bodenschicht erzielt werden, wobei die zweiten Abdichtkörper nicht nur vertikal versetzt, sondern auch horizontal versetzt zu den ersten Abdichtkörpern so angeordnet werden, dass diese die horizontalen Rasterzwischenräume der ersten Abdichtkörper mit einem vertikalen Höhenversatz zumindest teilweise oder ganz abdecken und dabei angrenzende erste Abdichtkörper kontaktieren. Vorzugsweise kann durch die zweiten Abdichtkörper zunächst zusammen mit den ersten Abdichtkörpern so eine in vertikaler Richtung wassersperrende Abdichtsohle im Boden erstellt werden. Die räumlich versetzte Anordnung ist auch weniger empfindlich gegen Wassereinschlüsse zwischen Abdichtkörpern, da planmäßige Zwischenräume vorgesehen sind.

Zur Abdichtung können gegebenenfalls noch weitere Abdichtkörper in weiteren vertikal beabstandeten Bodenschichten erstellt werden. Insgesamt wird so eine Abdichtsohle erstellt, welche über einen vertikalen Bereich, welcher sich zumindest von der ersten Bodenschicht zur zweiten Bodenschicht erstreckt und abwechselnd Abdichtkörper und Rasterzwischenräume mit unbehandeltem Boden aufweist, wobei jedoch die Abdichtkörper in horizontaler und in vertikaler Richtung so miteinander in Kontakt stehen, dass trotz der Rasterzwischenräume mit unbehandeltem Boden eine Abdichtsohle gebildet wird, welche in vertikaler Richtung wassersperrend ist. Die Anordnungsraster der ersten Abdichtkörper und die zweiten Abdichtkörper sind horizontal und vertikal zueinander versetzt.

Besonders bevorzugt ist es nach einer Weiterbildung der Erfindung, dass die ersten Abdichtkörper und/oder die zweiten Abdichtkörper zumindest teilweise kugelförmig ausgebildet werden. Die Abdichtkörper können dabei halbkugelförmig oder kugelförmig ausgebildet sein. Dabei können die Abdichtkörper mit einer Injektionslanze erstellt werden, welche im Wesentlichen eine oder mehrere radial gerichtete Austriebsdüsen aufweist, welche um eine horizontale Achse in einem Winkel zwischen ca. 90° und ca. 180° geneigt angeordnet oder verschwenkbar sind. Bei rotierender Injektionslanze, welche um ihre Längs- oder Vertikalachse gedreht wird, kann sich so ein teilkugelförmiger oder vorzugsweise etwa kugelförmiger Abdichtkörper ausbilden. Alternativ kann die Injektionslanze auch stillstehen, wenn sie mit einem entsprechenden umlaufenden Injektionsschlitz oder mehreren Schlitzen versehen ist. Bei halbkugelförmigen Abdichtkörpern sind diese so ausgebildet, dass die kugelförmigen Bereiche zueinander gerichtet sind. Die Kugelform ist dabei nicht streng geometrisch zu verstehen. Vielmehr können sich aufgrund von Ungleichmäßigkeiten im Bodenaufbau unterschiedliche radiale Injektionsweiten ergeben, welche zu Abweichungen von einer strengen Kugelform führen können.

Grundsätzlich können die Abdichtkörper unterschiedlich ausgebildet sein. Insbesondere können die ersten Abdichtkörper unterschiedlich zu den zweiten Abdichtkörpern ausgeformt werden. Eine bevorzugte Ausführungsvariante des erfindungsgemäßen Verfahrens besteht darin, dass die Abdichtkörper gleich ausgebildet werden. Die Abdichtkörper können somit mit einer gleich ausgebildeten Injektionslanze in effizienter Weise erstellt werden.

Eine besonders materialeffiziente Herstellung einer Abdichtsohle ergibt sich nach einer Weiterbildung der Erfindung dadurch, dass die zweiten Abdichtkörper jeweils etwa mittig zu einem Rasterzwischenraum angeordnet werden, welcher durch erste Abdichtkörper gebildet wird. Die ersten Abdichtkörper werden dabei mit einem gleichmäßigen Rasterabstand oder einem regelmäßigen Rastermuster erstellt. Es ergeben sich so gleichmäßige oder regelmäßige Rasterzwischenräume in der ersten Bodenschicht. Die zweiten Abdichtkörper werden dabei jeweils mittig zu diesen Rasterzwischenräumen jedoch in der zweiten Bodenschicht erzeugt.

Besonders bevorzugt ist es dabei, dass der ersten Abdichtkörper in einem flächigen Dreiecksraster angeordnet werden und dass die zweiten Abdichtkörper jeweils etwa mittig, aber höhenversetzt zu je drei ersten Abdichtkörpern angeordnet werden und an diese angrenzen. Dabei können vorzugsweise jeweils drei erste Abdichtkörper, welche aneinander angrenzen, in der Form eines gleichschenkligen Dreiecks, vorzugsweise in der Rasterform eines gleichseitigen Dreiecks, angeordnet sein. Bei gleich ausgebildeten zweiten Abdichtkörpern sind diese ebenfalls in einem entsprechenden Dreiecksraster angeordnet, wobei dieses jedoch so versetzt zu den ersten Abdichtkörpern angeordnet ist, dass die zweiten Abdichtkörper jeweils etwa mittig in dem etwa dreieckigen Rasterzwischenraum der ersten Abdichtkörper zu liegen kommen.

Eine alternative Ausführungsvariante der Erfindung besteht darin, dass die ersten Abdichtkörper in einem flächigen Vierecksraster angeordnet werden, und dass die zweiten Abdichtkörper jeweils etwa mittig, aber höhenversetzt zu je vier ersten Abdichtkörpern angeordnet werden und an diese angrenzen. Bei dem flächigen Vierecksraster können vier angrenzende erste Abdichtkörper ein quaderförmiges Raster bilden, bei welchem zwei gegenüberliegende Seiten jeweils gleich, aber unterschiedlich zu den beiden anderen Seiten sind. Vorzugsweise ist das Vierecksraster ein Quadratraster, bei welchem alle Seiten des Vierecks gleich lang sind.

In entsprechender Weise wird eine Rasteranordnung bei den zweiten Abdichtkörpern vorgesehen, wobei dieses Raster jedoch so versetzt zu dem ersten Raster angeordnet ist, dass die zweiten Abdichtkörper etwa mittig in dem Zwischenraum der ersten Abdichtkörper liegen.

Nach einer Weiterbildung der Erfindung ist es vorteilhaft, dass weitere Abdichtkörper in zumindest einer dritten Bodenschicht ausgebildet werden, welche vertikal beabstandet zu der ersten Bodenschicht und der zweiten Bodensicht sind. Es können jedoch auch vier, fünf oder mehr Bodenschichten vorgesehen sein, welche jeweils mit Abdichtkörpern, vorzugsweise etwa kugelförmigen Abdichtkörpern gebildet sind. Insgesamt kann so eine Anordnung von Abdichtkörpern über eine vertikale Höhe von mehreren Metern in materialschonender Weise eingesetzt werden. Durch das jeweilige horizontale und vertikale Versetzen der Abdichtkörper kann so eine dreidimensionale Raumstruktur der Abdichtsohle erzielt werden, bei welcher selbst bei einem Verbleiben von Fehlstellen kaum ein vertikaler Wasserdurchtritt ermöglicht wird.

Dabei können beispielsweise die dritten Abdichtkörper in der dritten Bodenschicht in horizontaler Richtung mit dem gleichen Raster wie die ersten Abdichtkörper in der ersten Bodenschicht ausgebildet werden, wobei zwischen den ersten und den dritten Abdichtkörpern vertikal und horizontal versetzt hierzu die zweiten Abdichtkörper angeordnet sind. Die ersten Abdichtkörper und die dritten Abdichtkörper können dabei mit derselben Injektionslanze in der gleichen Bohrung erstellt werden. Dabei kann entweder die Injektionslanze die ersten Abdichtkörper und die dritten Abdichtkörper mit einer unterschiedlichen Einbringtiefe im Boden erstellen. Alternativ können an der Abdichtlanze mehrere vertikal zueinander versetzte radiale Austrittsdüsen vorgesehen sein, so dass die ersten Abdichtkörper und die dritten Abdichtkörper gleichzeitig oder zeitnah mit derselben Injektionslanze ausgebildet werden können.

Erfindungsgemäß ist vorgesehen, dass zum Bilden der Abdichtkörper ein Gelmaterial injiziert wird. In grundsätzlich bekannter Weise kann das Gelmaterial in den umgebenden Boden injiziert werden, wobei das Gelmaterial Wasser zwischen den Körnern des Bodenmaterials verdrängt und diese Zwischenräume wasserundurchlässig verschießen kann.

Alternativ oder ergänzend kann zum Bilden der Abdichtkörper ein aushärtbares Material injiziert werden. Das aushärtbare Material kann insbesondere ein Zementwerkstoff sein, so dass nicht nur eine wassersperrende, sondern auch eine mechanisch tragfähige Abdichtsohle erstellt werden kann.

Die erfindungsgemäße Abdichtsohle ist dadurch gekennzeichnet, dass eine Vielzahl erster Abdichtkörper in einer ersten Bodenschicht in einem vorgegebenen ersten Abstandsraster mit Rasterzwischenräumen erstellt sind, und dass eine Vielzahl zweiter Abdichtkörper in einer zweiten Bodenschicht, welche einen vorgegebenen vertikalen Abstand zu der ersten Bodenschicht hat, versetzt zu den ersten Abdichtkörpern angeordnet ist, wobei zum Bilden der Abdichtsohle die zweiten Abdichtkörper die Rasterzwischenräume der ersten Abdichtkörper zumindest teilweise abdecken und mit angrenzenden ersten Abdichtkörpern in Kontakt stehen.

Die erfindungsgemäße Abdichtsohle kann durch ein zuvor beschriebenes Verfahren hergestellt werden. Durch ein horizontales und vertikales Versetzen der Abdichtkörper zueinander kann insgesamt eine geschlossene Abdichtsohle hergestellt werden, welche in vertikaler Richtung wassersperrend ist. Insgesamt kann so eine dichte und kompakte Abdichtsohle bei einem effizienten Material- und Arbeitseinsatz erstellt werden. Die kompakte Anordnung der Abdichtsohle erlaubt zudem eine tieferliegende Oberkante der Abdichtsohle. Damit kann auch eine erhöhte hydraulische Sicherheit erreicht werden.

Die Erfindung wird nachfolgend anhand von bevorzugten Ausführungsbeispielen weiter beschrieben, welche schematisch in den Zeichnungen dargestellt sind. In den Zeichnungen zeigen:

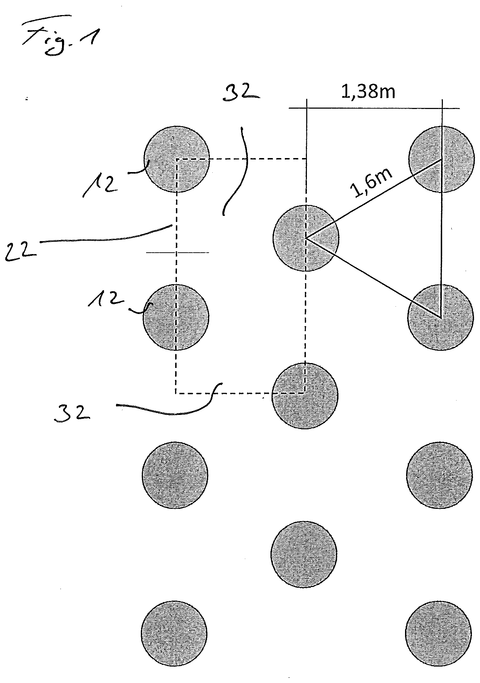

Fig. 1    eine erste Anordnung in einer Bodenschicht in einem Dreiecksraster;

Fig. 2    eine Draufsicht auf eine zweite Anordnung in einem Vierecksraster;

Fig. 3    eine räumliche Darstellung der Anordnung von Fig. 2;

Fig. 4    eine weitere räumliche Darstellung zu den Figuren 2 und 3; und

Fig. 5    eine weitere räumliche Darstellung zu einer Abdichtsohle nach einer Anordnung nach den Figuren 2 bis 4.

Zur Bildung einer Abdichtsohle kann in einer ersten Bodenschicht 22 eine Vielzahl von ersten Abdichtkörpern 12 in einem vorgegebenen Abstandsraster ausgebildet werden, wobei zwischen den einzelnen ersten Abdichtkörpern 12 Rasterzwischenräume 32 entstehen. In den Rasterzwischenräumen 32 befindet sich unbehandelter oder weitgehend unbehandelter Boden, während im Bereich der ersten Abdichtkörper 12 ein entsprechendes Abdichtmaterial injiziert ist. Die ersten Abdichtkörper 12 können im Wesentlichen eine Kugelform aufweisen.

Bei der Betrachtung in Reihen haben die ersten Abdichtkörper 12, welche im Wesentlichen durch ihre Injektionspunkte dargestellt sind, innerhalb einer Reihe einen konstanten Abstand a, also beispielsweise einen Abstand von 1,6 m. Die einzelnen Reihen haben einen Reihenabstand von 0,866 a des Einzelabstandes, also im dargestellten Ausführungsbeispiel von 1,38 m.

Anstelle der Einbringung weiterer Abdichtkörper in der gleichen Bodenschicht 22, also auf demselben Tiefenniveau, werden zur Herstellung einer erfindungsgemäßen Abdichtsohle zweite Abdichtkörper vertikal beabstandet in der Mitte der etwa dreiecksförmigen Rasterzwischenräume 32 gebildet, welche jeweils durch drei angrenzende erste Abdichtkörper 12 erfasst sind.

Die zweiten Abdichtkörper können dabei so zu dem ersten Raster angeordnet werden, dass diese an die ersten Abdichtkörper 12 angrenzen und so eine wassersperrende Abdichtsohle ergeben.

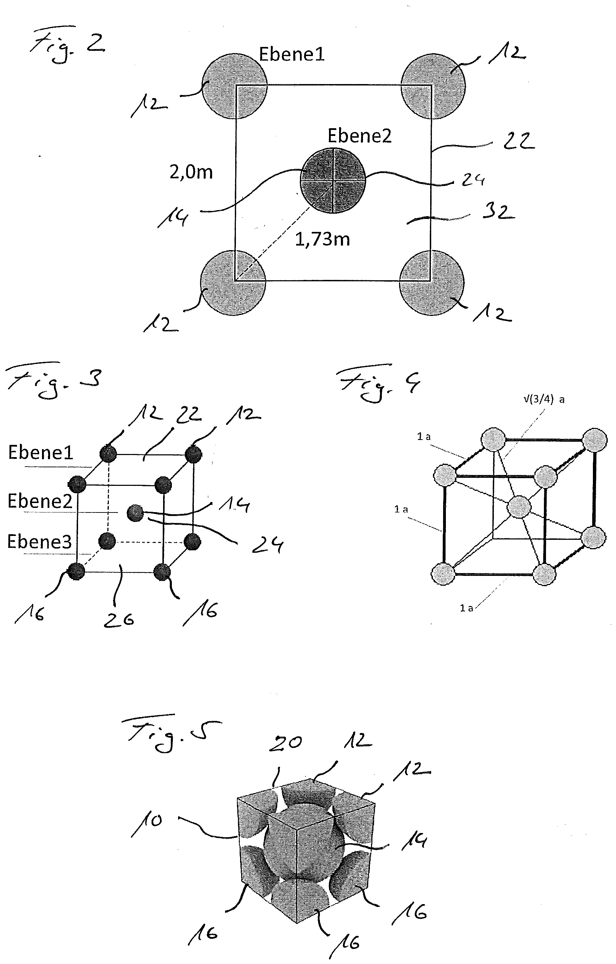

Gemäß einer bevorzugten Ausführungsform der Erfindung wird dies gemäß Fig. 2 durch eine quadratrasterförmige Anordnung der ersten Abdichtkörper 12 erreicht. Diese werden in einer ersten Bodenschicht 22, welche als Ebene 1 bezeichnet ist, so angeordnet, dass der Abstand in der Reihe sowie ein Reihenabstand zueinander jeweils die gleiche Länge aufweist. Hierdurch wird durch jeweils vier aneinander angrenzende erste Abdichtkörper 12 ein etwa quadratischer Rasterzwischenraum 32 umfasst. Mittig zu diesem Rasterzwischenraum 32 wird in einer zweiten Bodenschicht 24, welche auch als Ebene 2 bezeichnet wird, ein zweiter Abdichtkörper 14 eingebracht. Die jeweils zweiten Abdichtkörper 14 sind dabei mittig, aber vertikal versetzt zu den quadratischen Rasterzwischenräumen 32 angeordnet, so dass ein zweiter Abdichtkörper 14 mit den angrenzenden vier ersten Abdichtkörpern 12 eine pyramidenartige Anordnung mit einer quadratischen Grundfläche bildet.

In der dargestellten Ausführungsfigur 2 sowie in den anderen Zeichnungsfiguren sind die etwa kugelförmigen Abdichtkörper 12, 14 nur schematisch mit einem kleineren Durchmesser dargestellt. Grundsätzlich werden die Abdichtkörper 12, 14 mit einem Durchmesser ausgebildet, so dass diese in ihren Randbereichen aneinander angrenzen.

In dem Ausführungsbeispiel gemäß Fig. 2 beträgt der quadratische Rasterabstand zwischen den ersten Abdichtkörpern 12 in der ersten Bodenschicht 22 2 m, während der Diagonalabstand zwischen einem ersten Abdichtkörper 12 und einem angrenzenden zweiten Abdichtkörper 14 1,73 m beträgt.

In den Figuren 3 und 4 ist eine weitere Ausführungsvariante dargestellt, bei welcher basierend auf der Anordnung gemäß Fig. 2 mit ersten Abdichtkörpern 12 in einer ersten Bodenschicht 22 und zweiten Abdichtkörpern 14 in einer zweiten Bodenschicht 24 noch zusätzlich dritte Abdichtkörper 16 in einer dritten Bodenschicht 26 ausgebildet sind. In Fig. 3 sind die Bodenschichten als Ebenen bezeichnet. Das quadratische Abstandsraster der ersten Abdichtkörper 12 in der ersten Bodenschicht 22 ist dabei gleich zu dem Abstandsraster der dritten Abdichtkörper 16 in der dritten Bodenschicht 26 ausgebildet. Die jeweils vertikal untereinander beziehungsweise übereinander ausgebildeten ersten Abdichtkörper 12 und dritten Abdichtkörper 16 können dabei in einer Bohrung mit einer Injektionslanze in der jeweiligen Bodenschicht erstellt werden. Die zweiten Abdichtkörper 14 in der zweiten Bodenschicht 24 sind zwischen den ersten Abdichtkörpern 12 und den dritten Abdichtkörpern 16 in einer kubisch raumzentrierten Anordnung eingebracht.

Diese kubisch raumzentrierte Anordnung bei einem Quadrat- oder Würfelraster mit der Seitenlänge a ist in Fig. 4 dargestellt. Bei dieser kubisch raumzentrierten Anordnung ergibt sich ein Diagonalabstand zu den jeweils dazwischenliegenden zweiten Abdichtkörpern 14 von $\sqrt{\left(\frac{3}{4}\right)}$ a.

In Fig. 5 ist ein Ausschnitt einer solchen erfindungsgemäßen Abdichtsohle 10 in einem Boden 20 dargestellt, wobei die oberen ersten Abdichtkörper 12 und die unteren dritten Abdichtkörper 16 in dem Ausschnitt jeweils nur geschnitten dargestellt sind. Zwischen jeweils vier oberen ersten Abdichtkörpern 12 und vier unteren dritten Abdichtkörpern 16 ist jeweils ein etwa kugelförmiger zweiter Abdichtkörper 14 angeordnet, so dass dieser an jeweils anderen Abdichtkörpern 12, 16 angrenzt.

Durch dieses räumliche Raster wird eine planmäßig dichtere Lagerung der Injektionskörper erreicht, wobei gleichzeitig die Injektionswege kurz und die Gefahr des Einschließens von Grundwasser in den Rasterzwischenräumen gering gehalten werden. Dabei können die Gelmengen je Injektionspunkt effizient gehalten werden, wobei in einer ersten Überlegung für das beispielhaft dargestellte Raster und eine angenommene Porosität von 30% für die Eckpunkte 2.100 l und für die Kernpunkte 1.850 l vorgesehen sein können.

Bei vier Hauptebenen und drei Zwischenebenen, also bei insgesamt sieben Bodenschichten mit vertikalem Abstand zueinander, kann beispielsweise so eine 8 m dicke Abdichtsohle 10 im Boden 20 erstellt werden.

Mit den beispielhaft genannten Gelmengen und Abständen ergibt sich rechnerisch eine 8 m dicke Gelsohle. Die Injektionsebenen rücken in der neuen Anordnung etwas näher zusammen, so dass bei gleicher Wandtiefe einer Umschließung eine Oberkante der Abdichtsohle 10 gegebenenfalls um ca. 1 m tiefer gelegt werden kann, so dass die Auflast innerhalb der Baugrube die Sicherheit gegen hydraulischen Grundbruch sogar noch erhöht.

Das räumliche Anordnungsraster bietet so eine größere Sicherheit für eine dichte, kompakte Abdichtsohle 10 und eine höhere Effektivität beim Injizieren des Abdichtmaterials, ohne dass mehr Material oder Arbeitszeit eingesetzt werden müssten. Die kompaktere Anordnung der Abdichtsohle 10 erlaubt zudem eine tieferliegende Oberkante der Abdichtsohle 10 und somit eine erhöhte hydraulische Sicherheit.

**Patentansprüche**

1. Verfahren zum Herstellen einer Abdichtsohle (10) im Boden (20) mittels einer Injektionslanze, welche bis zu einer definierten Bodenschicht eingebracht und durch welche ein Gelmaterial als Abdichtmedium in den Boden (20) injiziert wird, wobei ein Abdichtkörper (12, 14, 16) im Boden erstellt wird, wobei das Gelmaterial Wasser zwischen Körnern des Bodenmaterials verdrängt und diese Zwischenräume wasserundurchlässig verschließt, und eine Vielzahl von Abdichtkörpern (12, 14, 16) derart beabstandet zueinander in die Bodenschicht eingebracht werden, so dass eine durchgehende Abdichtsohle (10) im Boden (20) gebildet wird, wobei

   eine Vielzahl erster Abdichtkörper (12) in einer ersten Bodenschicht (22) in einem vorgegebenen ersten Abstandsraster mit Rasterzwischenräumen (32) erstellt wird, wobei die ersten Abdichtkörper (12) in einer horizontalen Richtung zueinander beabstandet sind, und wobei eine Vielzahl zweiter Abdichtkörper (14) in einer zweiten Bodenschicht (22), welche einen vorgegebenen vertikalen Abstand zu der ersten Bodenschicht (22) hat, versetzt zu den ersten Abdichtkörpern (12) eingebracht wird, wobei zum Bilden der Abdichtsohle (10) die zweiten Abdichtkörper (14) die Rasterzwischenräume (32) der ersten Abdichtkörper (12) zumindest teilweise abdecken und angrenzende erste Abdichtkörper (12) kontaktieren.

2. Verfahren nach Anspruch 1,
**dadurch gekennzeichnet,**
**dass** die ersten Abdichtkörper (12) und/oder die zweiten Abdichtkörper (14) zumindest teilweise kugelförmig ausgebildet werden.

3. Verfahren nach Anspruch 1 oder 2,
**dadurch gekennzeichnet,**
**dass** die Abdichtkörper (12, 14, 16) gleich ausgebildet werden.

4. Verfahren nach einem der Ansprüche 1 bis 3,
**dadurch gekennzeichnet,**
**dass** die zweiten Abdichtkörper (14) jeweils etwa mittig zu einem Rasterzwischenraum (32) angeordnet werden, welcher durch erste Abdichtkörper (12) gebildet wird.

5. Verfahren nach einem der Ansprüche 1 bis 4,
**dadurch gekennzeichnet,**

**dass** die ersten Abdichtkörper (12) in einem flächigen Dreiecksraster angeordnet werden und **dass** die zweiten Abdichtkörper (14) jeweils etwa mittig, aber höhenversetzt zu je drei ersten Abdichtkörpern (12) angeordnet werden und an diese angrenzen.

6. Verfahren nach einem der Ansprüche 1 bis 4,
**dadurch gekennzeichnet,**

**dass** die ersten Abdichtkörper (12) in einem flächigen Vierecksraster angeordnet werden und **dass** die zweiten Abdichtkörper (14) jeweils etwa mittig, aber höhenversetzt zu je vier ersten Abdichtkörpern (12) angeordnet werden und an diese angrenzen.

7. Verfahren nach einem der Ansprüche 1 bis 6,
**dadurch gekennzeichnet,**
**dass** weitere Abdichtkörper (16) in zumindest einer dritten Bodenschicht (26) ausgebildet werden, welche vertikal beabstandet zu der ersten Bodenschicht (22) und der zweiten Bodenschicht (24) ist.

8. Verfahren nach einem der Ansprüche 1 bis 7,
**dadurch gekennzeichnet,**
**dass** zum Bilden der Abdichtkörper (12, 14, 16) ein aushärtbares Material injiziert wird.

9. Abdichtsohle (20) im Boden, welche insbesondere nach einem Verfahren nach einem der Ansprüche 1 bis 8 hergestellt ist,

wobei die Abdichtsohle (10) aus einer Vielzahl von Abdichtkörpern (12, 14, 16) aus einem injizierten Gelmaterial als Abdichtmedium gebildet ist, wobei das Gelmaterial Wasser zwischen Körnern des Bodenmaterials verdrängt und diese Zwischenräume wasserundurchlässig verschließt, und
die Abdichtkörper (12, 14, 16) derart beabstandet zueinander eingebracht sind, so dass diese eine durchgehende Abdichtsohle (10) bilden, wobei eine Vielzahl erster Abdichtkörper (12) in einer ersten Bodenschicht (22) in einem vorgegebenen ersten Abstandsraster mit Rasterzwischenräumen (32) erstellt sind, und
und wobei eine Vielzahl zweiter Abdichtkörper (14) in einer zweiten Bodenschicht (24), welche einen vorgegebenen vertikalen Abstand zu der ersten Bodenschicht (22) hat, versetzt zu den ersten Abdichtkörpern (12) angeordnet sind, wobei zum Bilden der Abdichtsohle (10) die zweiten Abdichtkörper (14) die Rasterzwischenräume (32) der ersten Abdichtkörper (12) zumindest teilweise abdecken und mit angrenzenden ersten Abdichtkörpern (12) in Kontakt stehen,.

**Claims**

1. Method for producing a sealing base (10) in the ground (20) by means of an injection lance which is introduced up to a defined ground layer and through which a gel material is injected as sealing medium into the ground (20), wherein a sealing body (12, 14, 16) is produced in the ground, wherein the gel material displaces water between grains of the ground material and closes up these interspaces in a water-impermeable manner, and a plurality of sealing bodies (12, 14, 16) are introduced into the ground layer by being spaced apart from each other such that a continuous sealing base (10) is formed in the ground (20),
wherein

a plurality of first sealing bodies (12) is produced in a first ground layer (22) in a predetermined first spacing grid with grid interspaces (32), wherein the first sealing bodies (12) are spaced apart from each other in a horizontal direction, and
wherein, offset to the first sealing bodies (12), a plurality of second sealing bodies (14) is introduced into a second ground layer (24) which has a predetermined vertical spacing to the first ground layer (22), wherein in order to form the sealing base (10) the second sealing bodies (14) at least partially cover the grid interspaces (32) of the first sealing bodies (12) and contact adjacent first sealing bodies (12).

2. Method according to claim 1,
   **characterized in that**
   the first sealing bodies (12) and/or the second sealing bodies (14) are designed at least partially spherical.

3. Method according to claim 1 or 2,
   **characterized in that**
   the sealing bodies (12, 14, 16) are designed identically.

4. Method according to any one of claims 1 to 3,
   **characterized in that**
   the second sealing bodies (14) are each arranged approximately centrally to a grid interspace (32) formed by first sealing bodies (12).

5. Method according to any one of claims 1 to 4,
   **characterized in that**

   the first sealing bodies (12) are arranged in a planar triangular grid and
   **in that** the second sealing bodies (14) are each arranged approximately centrally but height-offset to three first sealing bodies (12) and located adjacent thereto.

6. Method according to any one of claims 1 to 4,
   **characterized in that**

   the first sealing bodies (12) are arranged in a planar quadrangular grid and
   **in that** the second sealing bodies (14) are each arranged approximately centrally but height-offset to four first sealing bodies (12) and located adjacent thereto.

7. Method according to any one of claims 1 to 6,
   **characterized in that**
   further sealing bodies (16) are designed at least in a third ground layer (26) which is vertically spaced from the first ground layer (22) and the second ground layer (24).

8. Method according to any one of claims 1 to 7,
   **characterized in that**
   to form the sealing bodies (12, 14, 16) a hardenable material is injected.

9. Sealing base (10) in the ground, in particular produced pursuant to a method according to any one of claims 1 to 8,

wherein the sealing base (10) is formed of a plurality of sealing bodies (12, 14, 16) from an injected gel material as sealing medium, wherein the gel material displaces water between grains of the ground material and closes up these interspaces in a water-impermeable manner, and the sealing bodies (12, 14, 16) are introduced by being spaced apart from each other such that these form a continuous sealing base (10), wherein a plurality of first sealing bodies (12) is produced in a first ground layer (22) in a predetermined first spacing grid with grid interspaces (32), and
wherein, offset to the first sealing bodies (12), a plurality of second sealing bodies (14) is arranged in a second ground layer (24) which has a predetermined vertical spacing to the first ground layer (22), wherein in order to form the sealing base (10) the second sealing bodies (14) at least partially cover the grid interspaces (32) of the first sealing bodies (12) and are in contact with adjacent first sealing bodies (12).

## Revendications

1. Procédé de fabrication d'une semelle d'étanchéité (10) dans le sol (20) au moyen d'une buse d'injection, laquelle est introduite jusqu'à une couche de sol définie et par laquelle un matériau en gel est injecté dans le sol (20) en tant que milieu d'étanchéité, dans lequel un corps d'étanchéité (12, 14, 16) est créé dans le sol, dans lequel le matériau en gel refoule de l'eau entre des grains du matériau de sol et ferme de manière imperméable ces espaces intermédiaires, et une pluralité de corps d'étanchéité (12, 14, 16) sont introduits dans la couche de manière espacée les uns par rapport aux autres de manière à former une semelle d'étanchéité (10) continue dans le sol (20),
   dans lequel

   une pluralité de premiers corps d'étanchéité (12) est créée dans une première couche de sol (22) dans une première grille d'espacement spécifiée avec des espaces intermédiaires de grille (32), dans lequel les premiers corps d'étanchéité (12) sont espacés les uns par rapport aux autres dans une direction horizontale, et
   dans lequel une pluralité de deuxièmes corps d'étanchéité (14) est introduite de manière décalée par rapport aux premiers corps d'étanchéité (12) dans une deuxième couche de sol (22), laquelle présente une distance verticale spécifiée par rapport à la première couche de sol (22), dans lequel pour former la semelle d'étanchéité (10), les deuxièmes corps d'étanchéité (14) recouvrent au moins en partie les espaces intermédiaires de grille (32) des premiers corps d'étanchéité (12) et entrent en contact avec des premiers corps d'étanchéité (12) adjacents.

2. Procédé selon la revendication 1,
**caractérisé en ce que**
les premiers corps d'étanchéité (12) et/ou les deuxièmes corps d'étanchéité (14) sont réalisés au moins en partie de manière sphérique.

3. Procédé selon la revendication 1 ou 2,
**caractérisé en ce que**
les corps d'étanchéité (12, 14, 16) sont réalisés de manière identique.

4. Procédé selon l'une des revendications 1 à 3,
**caractérisé en ce que**
les deuxièmes corps d'étanchéité (14) sont disposés respectivement à peu près au centre par rapport à un espace intermédiaire de grille (32), lequel est formé par des premiers corps d'étanchéité (12).

5. Procédé selon l'une des revendications 1 à 4,
**caractérisé en ce que**
les premiers corps d'étanchéité (12) sont disposés dans une grille triangulaire plate, et que les deuxièmes corps d'étanchéité (14) sont disposés respectivement à peu près au centre, toutefois de manière décalée en hauteur par rapport à respectivement trois premiers corps d'étanchéité (12) et sont adjacents à ceux-ci.

6. Procédé selon l'une des revendications 1 à 4,
**caractérisé en ce que**

les premiers corps d'étanchéité (12) sont disposés dans une grille quadrangulaire plate, et
**en ce que** les deuxièmes corps d'étanchéité (14) sont disposés respectivement à peu près au centre, toutefois de manière décalée en hauteur par rapport à respectivement quatre premiers corps d'étanchéité (12) et sont adjacents à ceux-ci.

7. Procédé selon l'une des revendications 1 à 6,
**caractérisé en ce que**
d'autres corps d'étanchéité (16) sont réalisés dans au moins une troisième couche de sol (26), laquelle est espacée verticalement par rapport à la première couche de sol (22) et à la deuxième couche de sol (24).

8. Procédé selon l'une des revendications 1 à 7,
**caractérisé en ce que**
pour former les corps d'étanchéité (12, 14, 16), un matériau durcissable est injecté.

9. Semelle d'étanchéité (20) dans le sol, laquelle est fabriquée en particulier selon un procédé selon l'une des revendications 1 à 8,

dans laquelle la semelle d'étanchéité (10) est formée à partir d'une pluralité de corps d'étanchéité (12, 14, 16) composés d'un matériau en gel injecté en tant que milieu d'étanchéité, dans laquelle le matériau en gel refoule de l'eau entre des grains du matériau de sol et ferme de manière imperméable ces espaces intermédiaires, et
les corps d'étanchéité (12, 14, 16) sont introduits de manière espacée les uns par rapport aux autres de manière à former une semelle d'étanchéité (10) continue,
dans laquelle une pluralité de premiers corps d'étanchéité (12) est créée dans une première couche de sol (22) dans une première grille d'espacement spécifiée avec des espaces intermédiaires de grille (32),
et dans laquelle une pluralité de deuxièmes corps d'étanchéité (14) sont disposés de manière décalée par rapport aux premiers corps d'étanchéité (12) dans une deuxième couche de sol (24), laquelle présente une distance verticale spécifiée par rapport à la première couche de sol (22), dans laquelle pour former la semelle d'étanchéité (10), les deuxièmes corps d'étanchéité (14) recouvrent au moins en partie les espaces intermédiaires de grille (32) des premiers corps d'étanchéité (12) et sont en contact avec des premiers corps d'étanchéité (12) adjacents.

Fig. 1

Fig. 2

Ebene1

12

12

2,0m

14

Ebene2

24

22

32

1,73m

12

12

Fig. 3

12  22  12

Ebene1

Ebene2

Ebene3

14

24

16  26  16

Fig. 4

√(3/4) a

1 a

1 a

1 a

Fig. 5

20  12

12

10

14

16  16  16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19751335 C1
- DE 19960023 A1
- DE 10218771 B4
- EP 3034701 B1
- EP 0918110 A1